# EUROPEAN PATENT APPLICATION

(11) **EP 3 273 419 A1**
(43) Date of publication of application: **24.01.2018**
(21) Application number: 17158212.5
(22) Date of filing: 27.02.2017
(51) Int. Cl.: G08C 17/02

(54) **REMOTE CONTROLLER SYSTEM AND METHOD FOR CONTROLLING MULTIPLE ELECTRONIC DEVICES**

(30) Priority: 22.07.2016 KR 20160093488; 14.10.2016 KR 20160133428
(71) Applicant: Ohsung Electronics Co., Ltd, Busan 47711 (KR)
(72) Inventor: CHOI, Byounggi, Daegu 42682 (KR); YIM, Huiju, Gyeongsangbuk-do 39421 (KR); CHA, Seunghun, Gyeongsangbuk-do 39146 (KR)
(74) Representative: Carvajal y Urquijo, Isabel

(57) **Abstract**

A remote control setting method for assigning an operation of a different electronic device to each function key of a common remote controller and controlling electronic devices, comprises the steps of entering a remote control setting mode, displaying a manufacturer name, a model name, and a recommended code set on a display device based on information about the electronic device detected by a set-top box when the set-top box and the electronic device are connected to each other through high definition multimedia interface (HDMI), and selecting the displayed recommended code set by an input key so that information about the selected code set is transmitted to the common remote controller and thus assigning a function key corresponding to the code set in assigning an operation of a selected electronic device to a predetermined function key.

## Description

### TECHNICAL FIELD

The present invention relates to an integrated remote controller, and more specifically, to a remote control setting system for controlling a plurality of electronic devices and a remote control setting method using the same.

### DISCUSSION OF RELATED ART

Recently, remote controlling techniques of various home electronic devices by a remote controller have become common, and thus more remote controllers have been used in each household.

As the number of remote controllers used in the home increased, it became difficult to manage the remote controls and to find a desired remote control when necessary. Thus, integrated remote controllers have been developed to combine various remote control functions.

The integrated remote controller (common remote controller) is a remote control which stores a control program capable of controlling a plurality of electronic devices on a single remote controller. If the electronic device to be controlled is selected, the integrated remote controller outputs control signals for controlling the selected electronic device.

However, such conventional integrated remote controllers cannot simultaneously control a television and a video player. If a user inputs a code set assigned to a corresponding electronic device (television), the conventional integrated remote controllers can play only the television.

Herein, in order to control the video player, the user should re-input a code set assigned to a corresponding electronic device (video player) to set it as an integrated remote control exclusive to the video player.

Further, there is an inconvenience that while a user needs to check the paper sheet on which an electronic device's code sets corresponding to all manufacturers are printed, the user should input the code set on the conventional integrated remote control.

### SUMMARY

The present invention has been proposed in order to solve problems as described above, and provides a remote control setting system and a remote control setting method using the same that may assign operations of different electronic devices to each function key of a common remote controller to control the electronic devices.

According to an embodiment of the present invention, a remote control setting method for assigning an operation of a different electronic device to each function key of a common remote controller and controlling electronic devices, comprises the steps of: entering a remote control setting mode; displaying a code set assigned to each manufacturer when a type of electronic device is selected; and assigning a function key corresponding to the code set by transmitting information about the selected code set to the common remote controller when any one code set displayed is selected by the input key in assigning the operation of the electronic device selected in the predetermined function key.

Further, the common remote controller receives the code set through a radio frequency (RF) communication manner.

Further, the function key comprises at least one of a power function key, a channel change function key, a volume adjustment function key, an external input function key, and a video play function key.

Further, according to another embodiment of the present invention, a remote control setting system comprises: a common remote controller comprising a plurality of input keys including each function key and each numeric key for assigning an operation of a different electronic device to each function key and controlling electronic devices; and a set-top box providing an image to a display device for the remote controller setting and exchanging a signal with the common remote controller in a bidirectional wireless communication manner. The common remote controller enters a remote control setting mode by inputting any one function key of the plurality of input keys. In assigning an operation of a selected electronic device to a predetermined function key in the remote control setting mode, when a type of electronic device displayed on the display device is selected, a code set assigned to each manufacturer is displayed on the display device. When the code set is selected by the input key, information about the selected code set is transmitted from the set-top box to the common remote controller to assign a function key corresponding to the code set.

Further, the code set is selected by sequentially selecting numbers 0 to 9, by input keys, displayed on the display device.

Further, the code set is selected by inputting a numeric key corresponding the number of the code set.

Further, the common remote controller and the set-top box exchange a signal through a radio frequency (RF) communication manner.

Further, the function key comprises at least one of a power function key, a channel change function key, a volume adjustment function key, an external input function key, and a video play function key.

Further, according to still another embodiment of the present invention, a remote control setting method for assigning operations of different electronic devices to each function key of a common remote controller and controlling electronic devices, comprises the steps of: entering a remote control setting mode; and assigning a function key corresponding to the code set by transmitting information about the code set selected at that time to the common remote controller, if the pressed input key is released, at the time that the selected electronic device performs the operation of the pressed input key while one input key of the plurality of input keys is pressed, in assigning the operation of the selected electronic device to the predetermined function key.

Further, the common remote controller receives the code set through a radio frequency (RF) communication manner.

Further, the function key comprises at least one of a power function key, a channel change function key, a volume adjustment function key, an external input function key, and a video play function key.

Further, according to still another embodiment of the present invention, a remote control setting system comprises: a common remote controller comprising a plurality of input keys including each function key and each numeric key for assigning an operation of a different electronic device to each function key and controlling electronic devices; and a set-top box providing an image to a display device for the remote controller setting and exchanging a signal with the common remote controller in a bidirectional wireless communication manner. The common remote controller enters a remote control setting mode by inputting any one function key of the plurality of input keys. In assigning an operation of a selected electronic device to a predetermined function key in the remote control setting mode, a type of electronic device displayed on the display device is selected, and a function key corresponding to the code set is assigned by transmitting information about the code set selected at that time to the common remote controller, if the pressed input key is released, at the time that the selected electronic device performs the operation of the pressed input key while one input key of the plurality of input keys is pressed.

Further, a type of electronic device and a manufacturer displayed on the display device are selected, and a function key corresponding to the code set is assigned by transmitting information about the code set selected at that time to the common remote controller, if the pressed input key is released, at the time that the selected electronic device performs the operation of the pressed input key while one input key of the plurality of input keys is pressed.

Further, the common remote controller receives the code set through a radio frequency (RF) communication manner.

Further, the function key comprises at least one of a power function key, a channel change function key, a volume adjustment function key, an external input function key, and a video play function key.

According to yet another embodiment of the present invention, a remote control setting method for assigning an operation of a different electronic device to each function key of a common remote controller and controlling electronic devices, comprises: the steps of entering a remote control setting mode; displaying a manufacturer, a model name, and a recommended code set on a display device based on information about the electronic device detected by a set-top box when the set-top box and the electronic device are connected to each other through high definition multimedia interface (HDMI); and selecting the displayed recommended code set by an input key so that information about the selected code set is transmitted to the common remote controller and thus assigning a function key corresponding to the code set in assigning an operation of a selected electronic device to a predetermined function key.

Further, the common remote controller receives the code set through a radio frequency (RF) communication manner.

Further, the function key comprises at least one of a power function key, a channel change function key, a volume adjustment function key, an external input function key, and a video play function key.

Further, according to yet another embodiment of the present invention, a remote control setting system comprises: a common remote controller comprising a plurality of input keys including each function key and each numeric key for assigning an operation of a different electronic device to each function key and controlling electronic devices; and a set-top box providing an image to a display device for a remote control setting and exchanging a signal with the common remote controller in a bidirectional wireless communication manner. The common remote controller enters a remote control setting mode by inputting any one function key of the plurality of input keys. In assigning an operation of a selected electronic device to a predetermined function key in the remote control setting mode, when the set-top box and the electronic device are connected to each other through high definition multimedia interface (HDMI), a manufacturer, a model name, and a recommended code set are displayed on the display device based on information about the electronic device detected by the set-top box. When the displayed recommended code set is selected by the input key, information about the selected code set is transmitted to the common remote controller to assign a function key corresponding to the code set.

Further, the code set is selected by sequentially selecting numbers 0 to 9, by input keys, displayed on the display device.

Further, the code set is selected by inputting a numeric key corresponding the number of the code set.

Further, the common remote controller and the set-top box exchange a signal through a radio frequency (RF) communication manner.

Further, the function key comprises at least one of a power function key, a channel change function key, a volume adjustment function key, an external input function key, and a video play function key.

Further, according to still another embodiment of the present invention, a remote control setting method for assigning operations of different electronic devices to each function key of a common remote controller and controlling electronic devices, comprises: the steps of entering a remote control setting mode; displaying a manufacturer name based on information about an electronic device detected by a set-top box when the set-top box and the electronic device are connected to each other through high definition multimedia interface (HDMI) and a plurality of recommended code sets corresponding to each model name of the displayed manufacturer on a display device; transmitting the input key to the electronic device by operating a power function key whenever information about the plurality of recommended code sets is automatically and sequentially transmitted from the set-top box to the common remote controller to assign an input key corresponding to the code set, in assigning an operation of a selected electronic device to a predetermined function key; and detecting whether the electronic device is turned off through the high definition multimedia interface (HDMI) by the set-top box, and stopping an automatic transmission of the code set if the electronic device is turned off.

Further, according to yet another embodiment of the present invention, a remote control setting system comprises: a common remote controller comprising a plurality of input keys including each function key and each numeric key for controlling to assign operations of different electronic devices to each function key; and a set-top box providing an image to a display device and exchanging signals with the common remote controller in a bidirectional wireless communication manner. The common remote controller enters a remote control setting mode by inputting any one function key of the plurality of input keys. In assigning an operation of a selected electronic device to a predetermined function key in the remote control setting mode, when the set-top box and the electronic device are connected to each other through high definition multimedia interface (HDMI), a manufacturer is displayed on the display device based on information about the electronic device detected by the set-top box, and a plurality of recommended code sets are displayed on the display device. Whenever information about the plurality of the recommended code sets is sequentially and automatically transmitted to the common remote controller to assign an input key corresponding to the code set, a power function key is automatically operated to transmit it to the electronic device. When the displayed recommended code sets are selected by the input key, information about the selected code set is transmitted to the common remote controller to assign a function key corresponding to the code set.

The remote control setting system and the remote control setting method using the same according to embodiments of the present invention may assign operations of different electronic devices to each function key of the common remote controller, and thus can control simultaneously a plurality of electronic devices.

### BRIEF DESCRIPTION OF THE DRAWINGS

Fig. 1 is a view illustrating a remote control setting system 1 according to an embodiment of the present invention,
Fig. 2 is a view illustrating a remote control setting system 2 according to another embodiment of the present invention,
Fig. 3 is a view illustrating a remote control setting system 3 according to still another embodiment of the present invention, and
Fig. 4 is a view illustrating a remote control setting system 4 according to yet still another embodiment of the present invention.

### DETAILED DESCRIPTION OF EXEMPLARY EMBODIMENTS

Hereinafter, in order to explain in detail such that a person skilled in the art easily performs the technical concept of the present invention, embodiments of the present invention will be described in detail with reference to the accompanying drawings.

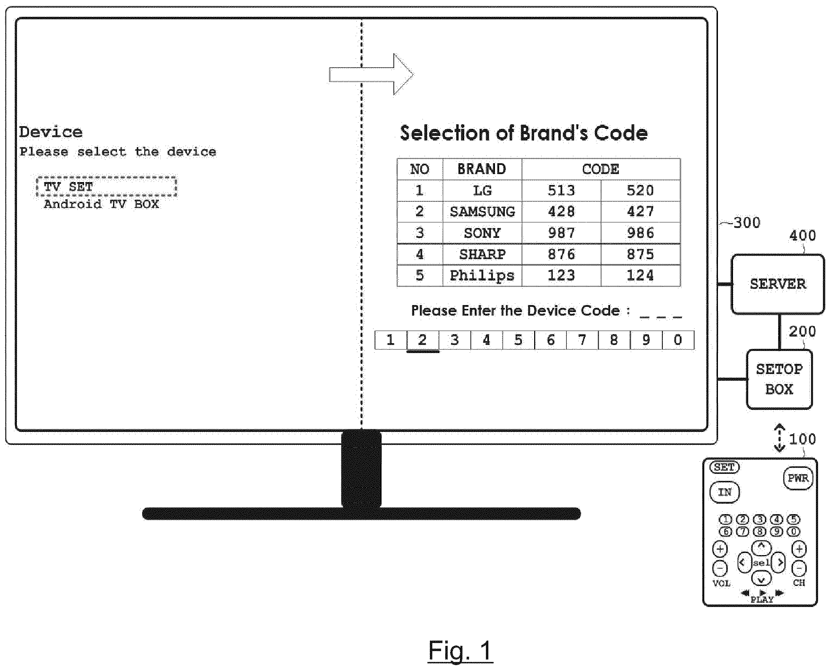

Fig. 1 is a view illustrating a remote control setting system 1 according to an embodiment of the present invention.

The remote control setting system 1 according to the present embodiment includes only a brief configuration for clearly explaining the technical concept to be proposed.

Referring to Fig. 1, the remote control setting system 1 comprises a common remote controller 100, a set-top box 200, a display device 300, and a server 400. Herein, the display device 300 is defined as a flat panel display such as a liquid crystal display (LCD), a light emitting diode display (LED display), a monitor, or a television (TV set).

The detailed configurations and main operations of the remote control setting system 1 configured as described above will be described below.

The common remote controller 100 comprises a plurality of input keys including function keys and numeric keys. The common remote controller 100 assigns operations of different electronic devices to each function key and controls the electronic devices.

In the present embodiment, the function keys of the plurality of input keys include a power function key (PWR), a channel change function key (CH), a volume adjustment function key (VOL), an external input function key (IN), a video play function key (PLAY), and a selection key (SEL), and the numeric keys of the plurality of input keys refer to keys marked with '0' to '9.'

The set-top box 200 provides an image to the display device 300 and exchanges signals with the common remote controller 100 in a bidirectional wireless communication manner. The set-top box 200 and the display device 300 are connected using any one of a component, composite, d-sub connector (D-SUB), digital visual interface (DVI), and high definition multimedia interface (HDMI) connecting scheme.

In the present embodiment, the common remote controller 100 and the set-top box 200 are configured to exchange signals with each other through a radio frequency (RF) communication system. Alternatively or optionally, the common remote controller 100 and the set-top box 200 may be configured to exchange signals with each other in a local wireless network manner such as Bluetooth, Zigbee, and Wi-Fi.

Any one function key of the plurality of input keys is entered, enabling the common remote controller 100 to enter into a remote control setting mode, and an operation of a selected electronic device is assigned to a predetermined function key in the remote control setting mode.

In the present embodiment, a description will be given centering on an example of the process of entering the remote control setting mode by inputting the setting key (SET) and assigning the volume adjustment function key (VOL) to the volume adjustment operation of the selected television (TV set) 300.

In other words, assuming that the common remote controller 100 basically comprises the plurality of input keys for controlling the operation of the set-top box 200, a process of assigning the volume adjustment function key (VOL) of the function keys to the volume adjustment operation of the selected television set (TV SET) will be described. As a result, the set-top box 200 as well as the volume adjustment of the television set (TV SET) 300 may be controlled using the common remote controller 100, and the video play function key (PLAY) may furtherly be assigned to the playing operation of the selected video player, and thus three electronic devices may be simultaneously controlled.

First, the input of the setting key (SET) enables entry into the remote control setting mode.

Next, when a type of electronic device displayed on the display device 300 is selected, a code set assigned to each manufacturer is displayed on the display device.

In the present embodiment, when a television set (TV SET) 300 is selected among electronic devices, a plurality of code sets respectively assigned to manufacturers, e.g., LG, SAMSUNG, SONY, SHARP, and PHILIPS, are simultaneously displayed on a screen of the display device 300. In other words, when the television set (TV SET) 300 is selected, a plurality of code sets displayed on the screen are code sets of the respective manufacturers, which may be assigned to the volume adjustment function key (VOL).

Next, when a code set is selected by the input key, information about the selected code set is transmitted to the common remote controller 100 through the RF communication from the set top box 200, and thus a function key (volume adjustment function key (VOL)) corresponding to the code set is assigned.

For example, when "513" of code sets is input by the input key, the code set for selecting volume adjustment of a television of the manufacturer "LG" is assigned to the volume adjustment function key (VOL).

Herein, the code set may be configured such that the numbers 0 to 9 displayed on the display device 300 are sequentially selected through the input key, or the code set may be configured to be selected by directly entering the numeric key corresponding to the code set's number.

Lastly, a user operates the function key (volume control function key VOL), and a process is thus performed of confirming whether the volume of the selected electronic device, i.e., the television (TV set) 300, is adjusted

For reference, the server 400 is connected to the Internet to provide digital contents to the display device 300 and the set-top box 200. The server 400 may function to provide an updated code set to the set-top box 200 whenever the code set assigned to each manufacturer is updated.

In other words, as described above, the remote control setting method for assigning an operation of a different electronic device for each function key of the common remote controller and controlling electronic devices, comprises the steps of entering the remote control setting mode, displaying a code set assigned to each manufacturer upon selecting a type of electronic device, and assigning a function key corresponding to the code set by transmitting information about the selected code set to the common remote controller 100 when any one code set displayed is selected by the input key in assigning the operation of the electronic device selected in the predetermined function key.

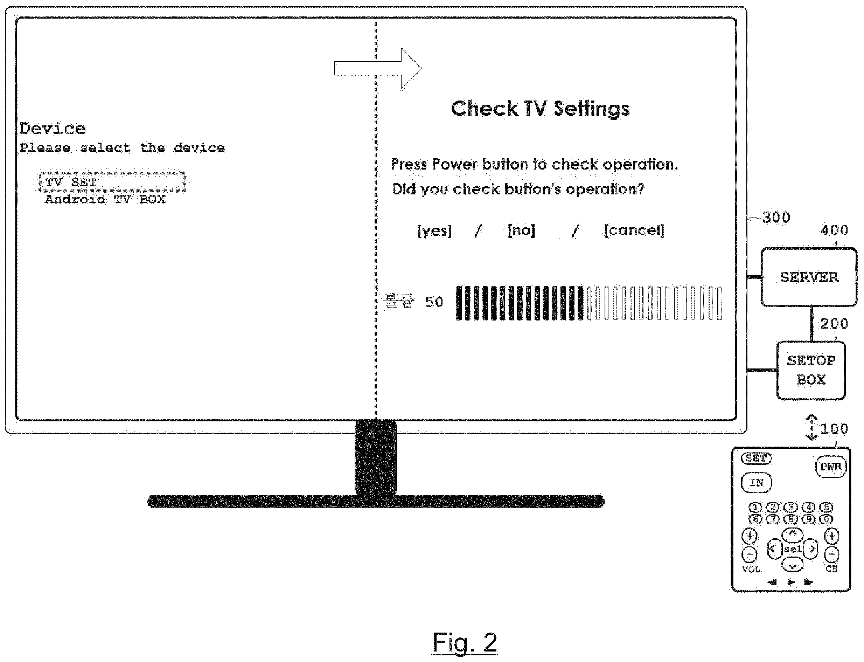

Fig. 2 is a view illustrating a remote control setting system 2 according to another embodiment of the present invention.

The remote control setting system 2 according to the present embodiment includes only a brief configuration for clearly explaining the technical concept to be proposed.

Referring to Fig. 2, the remote control setting system 2 comprises a common remote controller 100, a set-top box 200, a display device 300, and a server 400. Herein, the display device 300 is defined as a flat panel display such as a liquid crystal display (LCD), a light emitting diode display (LED display), a monitor, or a television (TV set).

The detailed configurations and main operations of the remote control setting system 2 configured as described above will be described below.

The common remote controller 100 comprises a plurality of input keys including function keys and numeric keys, and assigns operations of different electronic devices to each function key to control the electronic devices.

In the present embodiment, the function keys of the plurality of input keys includes a power function key (PWR), a channel change function key (CH), a volume adjustment function key (VOL), an external input function key (IN), a video play function key (PLAY), and a selection key (SEL), and the numeric keys of the plurality of input keys refer to keys marked with '0' to '9.'

The set-top box 200 provides an image to the display device 300 and exchanges signals with the common remote controller 100 in a bidirectional wireless communication manner. The set-top box 200 and the display device 300 are connected using any one of a component, composite, d-sub connector (D-SUB), digital visual interface (DVI), and high definition multimedia interface (HDMI) connecting scheme.

In the present embodiment, the common remote controller 100 and the set-top box 200 are configured to exchange signals with each other through an RF communication system. Alternatively or optionally, the public remote controller 100 and the set-top box 200 may be configured to exchange signals with each other in a local wireless network scheme such as Bluetooth, Zigbee, and Wi-Fi.

Any one function key of the plurality of input keys is entered, enabling the common remote controller 100 to enter into a remote control setting mode, and an operation of a selected electronic device is assigned to a predetermined function key in the remote control setting mode.

In the present embodiment, a description will be given centering on an example of the process of entering the remote control setting mode by inputting the setting key (SET) and assigning the volume adjustment function key (VOL) to the volume adjustment operation of the selected television (TV set) 300.

In other words, assuming that the common remote controller 100 basically comprises the plurality of input keys for controlling the operation of the set-top box 200, a process of assigning the volume adjustment function key (VOL) of the function keys to the volume adjustment operation of the selected television set (TV SET) will be described. As a result, the set-top box 200 as well as the volume adjustment of the television set (TV SET) 300 may be controlled using the common remote controller 100, and the video play function key (PLAY) may furtherly be assigned to the playing operation of the selected video player, and thus three electronic devices may be simultaneously controlled.

First, when the remote control setting mode is entered through the input of the setting key (SET), a menu for selecting whether to assign a code set of an electronic device is displayed on the display device 300.

For reference, a menu that can select each manufacturer, e.g., LG, SAMSUNG, SONY, SHARP, and PHILIPS, may be configured to be additionally displayed on the display device 300.

In other words, a first menu for selecting a code set of an electronic device to be assigned to a predetermined function key and a second menu for selecting a manufacturer of the selected electronic device respectively may be displayed. Fig. 2 shows an example in which only the first menu is displayed.

Next, at the time that the selected electronic device (television (TV set) 300) performs the operation while one input key designated of the plurality of input keys is pressed on an image for a remote control setting, if the pressed input key is released, information about the selected code set at that time is transmitted from the set-top box 200 to the common remote controller 100 through RF communication so that a function key (volume adjustment function key (VOL)) corresponding to the code set is assigned.

In the present embodiment, at the time that the display device 300 (television) performs a turn-off operation while the power function key (PWR) is pressed, if the power function key (PWR) is released, the code set is transmitted to the common remote controller 100.

For reference, when a type of electronic device displayed on the display device 300 as well as a manufacturer may be selected, that is, when the first menu for selecting the code set of the electronic device to be assigned to a predetermined function key and the second menu for selecting a manufacturer of the selected electronic device respectively are displayed to be selected, since the number of code sets to be found decreases when the power function key (PWR) is pressed, the desired code set can be automatically searched more quickly.

Lastly, a user operates the function key (volume control function key VOL), and thus a process of confirming whether the volume of the selected electronic device, i.e., the television (TV set) 300, is adjusted is performed.

For reference, the server 400 is connected to the Internet to provide digital contents to the display device 300 and the set-top box 200. The server 400 may function to provide an updated code set to the set-top box 200 whenever the code set assigned to each manufacturer is updated.

In other words, as described above, the remote control setting method for assigning an operation of a different electronic device to each function key of the common remote controller and controlling electronic devices comprises the steps of entering the remote control setting mode, and assigning the function key corresponding to the code set by transmitting information of the selected code set to the common remote controller 100 when the pressed input key is released at the time that the selected electronic device performs the operation while one input key designated of the plurality of input keys is pressed in the image for remote controller setting, in assigning the operation of the selected electronic device to the predetermined function key.

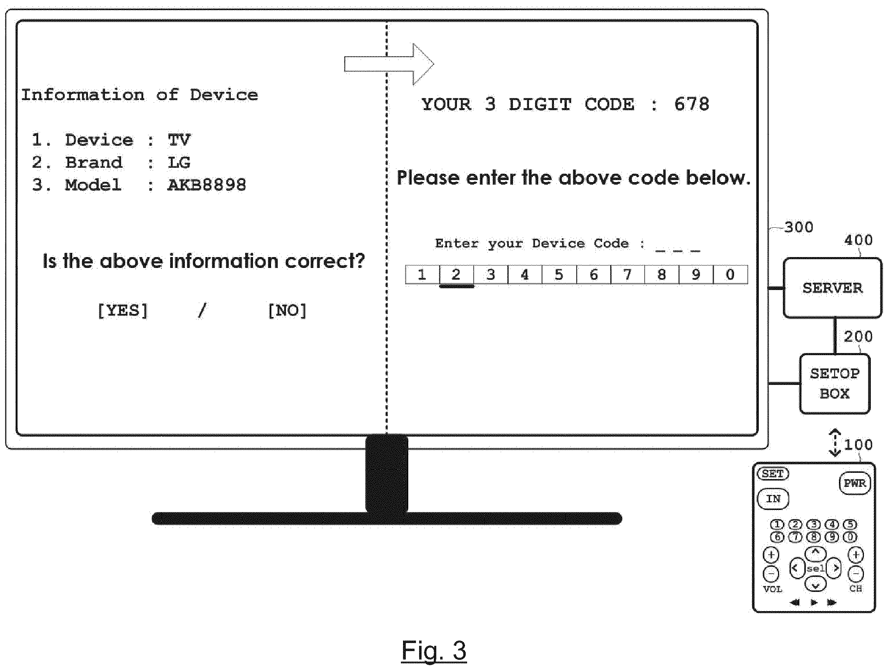

Fig. 3 is a view illustrating a remote control setting system 3 according to still another embodiment of the present invention.

The remote control setting system 3 according to the present embodiment includes only a brief configuration for clearly explaining the technical concept to be proposed.

Referring to Fig. 3, the remote control setting system 3 comprises a common remote controller 100, a set-top box 200, a display device 300, and a server 400. Herein, the display device 300 is defined as a flat panel display such as a liquid crystal display (LCD), a light emitting diode display (LED display), a monitor, or a television (TV set).

The detailed configurations and main operations of the remote control setting system 3 configured as described above will be described below.

The common remote controller 100 comprises a plurality of input keys including function keys and numeric keys. The common remote controller 100 assigns operations of different electronic devices to each function key and controls the electronic devices.

In the present embodiment, the function keys of the plurality of input keys includes a power function key (PWR), a channel change function key (CH), a volume adjustment function key (VOL), an external input function key (IN), a video play function key (PLAY), and a selection key (SEL), and the numeric keys of the plurality of input keys refer to keys marked with '0' to '9.'

The set-top box 200 provides an image to the display device 300 and exchanges signals with the common remote controller 100 in a bidirectional wireless communication manner. The set-top box 200 and the display device 300 are connected though high definition multimedia interface (HDMI).

In the present embodiment, the common remote controller 100 and the set-top box 200 are configured to exchange signals with each other through an RF communication system Alternatively or optionally, the common remote controller 100 and the set-top box 200 may be configured to exchange signals with each other in a local wireless network scheme such as Bluetooth, Zigbee, and Wi-Fi.

Any one function key of the plurality of input keys is entered, enabling the common remote controller 100 to enter into a remote control setting mode, and an operation of a selected electronic device is assigned to a predetermined function key in the remote control setting mode.

In the present embodiment, a description will be given centering on an example of the process of entering the remote control setting mode by inputting the setting key (SET) and assigning the volume adjustment function key (VOL) to the volume adjustment operation of the selected television (TV set) 300.

In other words, assuming that the common remote controller 100 basically comprises the plurality of input keys for controlling the operation of the set-top box 200, a process of assigning the volume adjustment function key (VOL) of the function keys to the volume adjustment operation of the selected television set (TV SET) will be described. As a result, the set-top box 200 as well as the volume adjustment of the television set (TV SET) 300 may be controlled using the common remote controller 100, and the video play function key (PLAY) may furtherly be assigned to the playing operation of the selected video player, and thus three electronic devices may be simultaneously controlled.

Firstly, the input of the setting key (SET) enables entry into the remote control setting mode. In the present embodiment, an example of assigning a volume adjustment function key (VOL) to the television (TV SET) 300 is described.

Next, when the set-top box 200 and the display device 300 are connected to each other through the high definition multimedia interface (HDMI), the manufacturer, the model name, and the recommended code set are displayed on the display device 300 based on the information about the display device 300 detected by the set top box 200.

Next, when the displayed recommended code set is selected by the input key, the information about the selected code set is transmitted to the common remote controller 100 through the RF communication from the set top box 200, and thus a function key (volume adjustment function key (VOL)) corresponding to the code set is assigned.

Herein, the code set may be configured such that the numbers 0 to 9 displayed on the display device 300 are sequentially selected through the input key, or the code set may be configured to be selected by directly entering the numeric key corresponding to the code set's number.

Lastly, a user operates the function key (volume control function key VOL), and thus a process of confirming whether the volume of the selected electronic device, i.e., the television (TV set) 300, is adjusted is performed.

For reference, the server 400 is connected to the Internet to provide digital contents to the display device 300 and the set-top box 200. The server 400 may function to provide an updated code set to the set-top box 200 whenever a code set assigned to each manufacturer is updated.

As described above, when the set-top box 200 and the display device 300 are connected to each other through the high definition multimedia interface (HDMI), the manufacturer, the model name, and the recommended code set are displayed on the display device 300 based on the information about the display device 300 detected by the set top box 200. Herein, the displayed recommended code set is a code set that can be assigned to the volume adjustment function key (VOL) for adjusting the volume of the display device.

Meanwhile, when the set-top box 200 and the video play device are connected to each other through the high definition multimedia interface (HDMI), the manufacturer, the model name, and the recommended code set are displayed on the display device 300 based on the information about the video play device detected by the set top box 200. Herein, the displayed recommended code set is a code set that can be assigned to a video play function key (PLAY) for adjusting the play function of the video play device.

In other words, as described above, the remote control setting method for assigning an operation of a different electronic device to each function key of the common remote controller and controlling electronic devices comprises the steps of entering the remote control setting mode, displaying a manufacturer, a model name, and a recommended code set on a display device based on the information about the electronic devices detected by the set-top box 200 when the set-top box 200 and the electronic device are connected to each other through the high-quality multi-media interface (HDMI), and assigning a function key corresponding to the code set by transmitting information about the selected code set to the common remote controller 100 when the displayed recommended code set is selected by the input key, in assigning the operation of the electronic device selected in the predetermined function key.

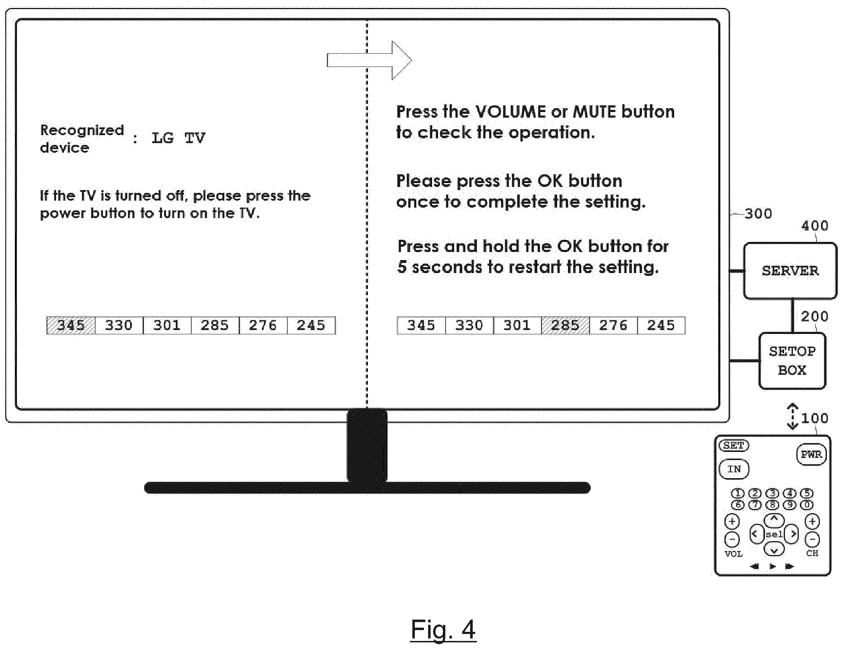

Fig. 4 is a view illustrating a remote control setting system 4 according to yet another embodiment of the present invention.

The remote control setting system 4 according to the present embodiment includes only a brief configuration for clearly explaining the technical concept to be proposed.

Referring to Fig. 4, the remote control setting system 4 comprises a common remote controller 100, a set-top box 200, a display device 300, and a server 400. Further, the display device 300 is defined as a flat panel display such as a liquid crystal display (LCD), a light emitting diode display (LED display), a monitor, or a television (TV set).

The detailed configurations and main operations of the remote control setting system 4 configured as described above will be described below.

The common remote controller 100 comprises a plurality of input keys including function keys and numeric keys. The common remote controller 100 assigns operations of different electronic devices to each function key and controls the electronic devices.

In the present embodiment, the function key of the plurality of input keys includes a power function key (PWR), a channel change function key (CH), a volume adjustment function key (VOL), an external input function key (IN), a video play function key (PLAY), and a selection key (SEL), and the numeric keys of the plurality of input keys refer to keys marked with '0' to '9.'

The set-top box 200 provides an image to the display device 300 and exchanges signals with the common remote controller 100 in a bidirectional wireless communication manner. The set-top box 200 and the display device 300 are connected though the high definition multimedia interface (HDMI).

In the present embodiment, the common remote controller 100 and the set-top box 200 are configured to exchange signals with each other through an RF communication system. Alternatively or optionally, the public remote controller 100 and the set-top box 200 may be configured to exchange signals with each other in a local wireless network scheme such as Bluetooth, Zigbee, and Wi-Fi.

Any one function key of the plurality of input keys is entered, enabling the common remote controller 100 to enter into a remote control setting mode, and an operation of a selected electronic device is assigned to a predetermined function key in the remote control setting mode. In other words, the remote control setting mode can be entered by any one of a plurality of input keys or a setup mode entering signal of the set-top box.

When the remote control setting mode is entered by the input of any one key in the common remote controller 100, the set-top box 200 simultaneously enters into the remote control setting mode.

In the present embodiment, a description will be representedly given centering on an example of the process of entering the remote control setting mode by inputting the setting key (SET) and assigning the volume adjustment function key (VOL) to the volume adjustment operation of the selected television (TV set) 300 and checking it.

In other words, assuming that the common remote controller 100 basically comprises the plurality of input keys for controlling the operation of the set-top box 200, a process of assigning the volume adjustment function key (VOL) among the function keys to the volume adjustment operation of the selected television set (TV SET) will be described. As a result, the set-top box 200 as well as the volume adjustment of the television set (TV SET) 300 may be controlled using the common remote controller 100, and the video play function key (PLAY) may furtherly be assigned to the playing operation of the selected video play device, and thus three electronic devices may be simultaneously controlled.

Firstly, the input of the setting key (SET) enables entry into the remote control setting mode, and in the present embodiment, an example of assigning a volume adjustment function key (VOL) to the television (TV SET) 300 is described.

Next, when the set-top box 200 and the display device 300 are connected to each other through the high definition multimedia interface (HDMI), since extended display identification data (EDID) is transmitted, the manufacturer name is displayed on the display device 300 based on the display device 300 detected by the set-top box 200.

Herein, a plurality of code sets respectively corresponding to model names of the displayed manufacturer are displayed in the display device 300.

Next, whenever information about the plurality of recommended code sets is sequentially and automatically transmitted to the common remote controller 100 from the set-top box 200 and an input key corresponding to the code set is assigned, the power function key (PWR) is automatically operated to transmit it to the electronic device (display device 300).

Next, the set-top box 200 detects whether the electronic device (display device 300) is turned off through the high definition multimedia interface (HDMI). When the electronic device (display device) 300 is turned off, the automatic transmission of the code set is stopped, and a function key (volume adjustment function key VOL)) corresponding to the last transmitted code set is assigned in the common remote controller 100.

Lastly, a user operates the function key (volume control function key (VOL)) and a mute function key (MUTE), and a process is thus performed of confirming whether the volume of the selected electronic device, i.e., the television (TV set), is adjusted.

Herein, when the particular function key (OK) is pressed once, the setting is completed. When the particular function key (OK) has been pressed for more than a predetermined time (3 seconds to 8 seconds), the remote control setting mode is switched again, and the operation for resuming the setting proceeds. Further, the setting completion command is transmitted from the set-top box to the remote controller to complete the setting.

For reference, the server 400 is connected to the Internet to provide digital contents to the display device 300 and the set-top box 200. The server 400 may function to provide an updated code set to the set-top box 200 whenever a code set assigned to each manufacturer is updated.

As described above, when the set-top box 200 and the display device 300 are connected to each other through the high-definition multimedia interface (HDMI), the name of the manufacturer and a plurality of recommended code sets corresponding to each product model name of the manufacturer based on the information of the display device 300 detected by the set-top box 200 are displayed or a signal (a letter or image) indicating that the code set is not displayed and is in progress is on the display device 300. Herein, the displayed recommended code set is a code set that can be assigned to the volume adjustment function key (VOL) for adjusting the volume of the display device.

Meanwhile, when the set-top box 200 and the video player are connected to each other through the high definition multimedia interface (HDMI), the manufacturer name is displayed on the display device 300 based on the information about the video player detected by the set top box 200.

Herein, the displayed plurality of recommended code sets are code sets that can be assigned to a video play function key (PLAY) for adjusting the play function of the video player. The plurality of code sets are automatically and sequentially transmitted from the set-top box 200 to the common remote controller 100, and such transmissions are repeated until the video player is turned off.

In other words, as described above, the remote control setting method for assigning an operation of a different electronic device for each function key of the common remote controller and controlling electronic devices comprises the steps of entering a remote control setting mode, displaying the manufacturer name based on the information about the electronic device detected by the set-top box and a plurality of the recommended code sets corresponding to each product model name of the manufacturer on the display device when the set-top box and the electronic device are connected to each other through the high definition multimedia interface (HDMI), transmitting an input key to the electronic device by automatically operating the power function key, whenever information about the plurality of the recommended code sets is automatically and sequentially transmitted from the set-top box to the common remote controller to assign an input key corresponding to the code set, in assigning the operation of the electronic device selected in the predetermined function key, and detecting whether the electronic device is turned off through the high definition multimedia interface (HDMI) by the set-top box and stopping the automatic transmission of the recommended code set when the electronic device is turned off.

The remote control setting system and the remote control setting method using the same according to the embodiment of the present invention can assign operations of different electronic devices to each function key of the common remote controller so that a plurality of electronic devices can be simultaneously controlled.

Thus, those skilled in the art will appreciate that the present invention can be embodied in other specific forms without departing from the technical concept or the essential characteristics of the present invention. It is therefore to be understood that the embodiments described above are to be considered only as illustrative and not limited in all respects. The scope of the present invention is defined by the appended claims rather than the detailed description as described above. It should be interpreted that all changes and modifications derived from the meaning and scope of the claims and their equivalents are included within the scope of the present invention.

### [Description of reference numbers]

- 100:: common remote controller
- 200:: set-top box
- 300:: display box
- 400:: server

## Claims

1. A remote control setting method for assigning an operation of a different electronic device to each function key of a common remote controller and controlling electronic devices, comprising the steps of:
entering a remote control setting mode;
displaying a manufacturer name, a model name, and a recommended code set on a display device based on information about the electronic device detected by a set-top box when the set-top box and the electronic device are connected to each other through high definition multimedia interface (HDMI); and
selecting the displayed recommended code set by an input key so that information about the selected code set is transmitted to the common remote controller and thus assigning a function key corresponding to the code set in assigning an operation of a selected electronic device to a predetermined function key.

2. The remote control setting method of claim 1, wherein the common remote controller receives the code set through a radio frequency (RF) communication manner.

3. The remote control setting method of claim 1, wherein the function key comprises at least one of a power function key, a channel change function key, a volume adjustment function key, an external input function key, and a video play function key.

4. A remote control setting system comprising:
a common remote controller comprising a plurality of input keys including each function key and each numeric key for assigning an operation of a different electronic device to each function key and controlling electronic devices; and
a set-top box providing an image to a display device and exchanging a signal with the common remote controller in a bidirectional wireless communication manner,
wherein the common remote controller enters a remote control setting mode by inputting any one function key of the plurality of input keys,
wherein in assigning an operation of a selected electronic device to a predetermined function key in the remote control setting mode, when the set-top box and the electronic device are connected to each other through a high definition multimedia interface (HDMI), a manufacturer, a model name, and a recommended code set are displayed on the display device based on information about the electronic device detected by the set-top box, and
wherein when the displayed recommended code set is selected by the input key, information about the selected code set is transmitted to the common remote controller to assign a function key corresponding to the code set.

5. The remote control setting system of claim 4, wherein the code set is selected by sequentially selecting numbers 0 to 9, by input keys, displayed on the display device.

6. The remote control setting system of claim 4, wherein the code set is selected by inputting a numeric key corresponding the number of the code set.

7. The remote control setting system of claim 4, wherein the common remote controller and the set-top box exchange a signal through a radio frequency (RF) communication manner.

8. The remote control setting system of claim 4, wherein the function key comprises at least one of a power function key, a channel change function key, a volume adjustment function key, an external input function key, and a video play function key.

9. A remote control setting method for assigning operations of different electronic devices to each function key of a common remote controller and controlling electronic devices, comprising the steps of:
entering a remote control setting mode;
displaying a manufacturer name based on information about an electronic device detected by a set-top box when the set-top box and the electronic device are connected to each other through a high definition multimedia interface (HDMI) and a plurality of recommended code sets corresponding to each model name of the manufacturer on a display device;
transmitting the input key to the electronic device by operating a power function key whenever information about the plurality of recommended code sets is automatically and sequentially transmitted from the set-top box to the common remote controller to assign an input key corresponding to the code set, in assigning an operation of a selected electronic device to a predetermined function key; and
detecting whether the electronic device is turned off through the high definition multimedia interface (HDMI) by the set-top box, and stopping an automatic transmission of the code set if the electronic device is turned off.

10. A remote control setting system comprising:
a common remote controller comprising a plurality of input keys including each function key and each numeric key for controlling to assign operations of different electronic devices to each function key; and
a set-top box providing an image to a display device and exchanging a signal with the common remote controller in a bidirectional wireless communication manner,
wherein the common remote controller enters a remote control setting mode by inputting any one function key of the plurality of input keys,
wherein in assigning an operation of a selected electronic device to a predetermined function key in the remote control setting mode, when the set-top box and the electronic device are connected to each other through high definition multimedia interface (HDMI), a manufacturer is displayed on the display device based on information about the electronic device detected by the set-top box and a plurality of recommended code sets corresponding to each product model name of the manufacturer are displayed on the display device,
wherein when the displayed recommended code set is selected by the input key, information about the selected code set is transmitted to the common remote controller to assign a function key corresponding to the code set, and
wherein whenever information about the plurality of recommended code sets is sequentially and automatically transmitted to the common remote controller from the set-top box and an input key corresponding to the code set is assigned, a power function key is automatically operated to transmit it to the electronic device, and
wherein the set-top box detects whether the electronic device is turned off through the high definition multimedia interface (HDMI), and an automatic transmission of the code set is stopped if the electronic device is turned off.
